# EUROPEAN PATENT SPECIFICATION

(11) **EP 0 829 484 B1**
(45) Date of publication and mention of the grant of the patent: **24.09.2003**
(21) Application number: 97114649.3
(22) Date of filing: 23.08.1997
(51) Int. Cl.: C07F 7/12

(54) **Hydrochlorination process for converting high-boiling residue from direct process to monosilanes**
Hydrochlorierungsverfahren zur Umwandlung von hochsiedenden Rückständen der Direktsynthese
Procédé de hydrochloration pour la conversion du résidu à point d'ébullition élevée obtenue par le procédé direct

(30) Priority: 11.09.1996 US 712226
(43) Date of publication of application: 18.03.1998
(73) Proprietor: DOW CORNING CORPORATION, Midland Michigan 48686-0994 (US)
(72) Inventor: Freeburne, Steven Kerry, Edgewood, Kentucky 41017 (US); Jarvis, Robert Frank, Jr., Midland, Michigan 48642 (US)
(74) Representative: Sternagel, Fleischer, Godemeyer & Partner Patentanwälte

(56) References cited:
- EP-A- 0 155 626
- EP-A- 0 812 850
- US-A- 5 292 912

## Description

The present invention is a hydrochlorination process for the production of monosilanes from the high-boiling residue, resulting from reaction of organochlorides with silicon metalloid in the "direct process". Our process comprises forming a mixture of said high-boiling residue and an organosilane and then contacting said mixture with hydrogen chloride in the presence of a catalytic amount of a catalyst composition effective in promoting the formation of monosilanes from the high-boiling residue. A preferred catalyst composition for use in our claimed process comprises aluminum trichloride, at least a portion of which is formed *in situ* during conduct of the direct process and isolation of the high-boiling residue.

In the preparation of organochlorosilanes by the direct process a complex mixture is formed that is normally distilled to separate monosilanes from other components present in said mixture. For example, in the "direct process", in addition to the monosilanes, which in the case of the chloromonosilanes include dimethyldichlorosilane, methyltrichlorosilane and trimethylchlorosilane, there is obtained a residue which boils above the organochlorosilanes, that is above 70°C. This residue is hereinafter defined as a "high-boiling residue."

The "direct process" is well described in the patent literature, see for example, U.S. Patents 2,380,995 and 2,488,487. The residue remaining after overhead distillation of the monosilanes is a complex mixture comprising higher boiling silicon containing compounds which have SiSi, SiOSi and SiCSi linkages in the molecules. The residue may also contain silicon particulates and metals or compounds thereof. Typical high-boiling residues obtained from distillation of product from the direct process are more completely described in U.S. Patents 2,598,435 and 2,681,355.

In current commercial operations for performing the direct process, the high-boiling residue constitutes as much as five weight percent of the final product. Therefore, it is desirable to convert this high-boiling residue into commercially desirable products to both reduce waste disposal and to improve raw material utilization.

Representative of this general prior art are: U.S. Patents 4,393,229; 5,175,329; 5,430,168; 2,681,355; 2,709,176 and 5,292,912.

An object of this invention is to provide a process where the high-boiling residue from the direct process for producing organohalosilanes is converted into commercially useful monosilanes. An advantage of our particular process is that it may be run as a one-step process without need to isolate more chlorinated intermediates, such as chlorodisilanes, or to perform further treatments to produce monosilanes. Another advantage of our process is that it converts both disilanes and other silicon containing species, such as silmethylenes and silalkylenes, to monosilanes.

The present invention is a hydrochlorination process for converting a high-boiling residue, resulting from the reaction of an organochloride with silicon, to monosilanes. This process comprises: (A) forming a mixture comprising (i) a high-boiling residue resulting from the reaction of an organochloride with silicon metalloid and (ii) an organosilane described by formula RₘHₙSiCl₄₋ₘ₋ₙ (1) where each R is independently selected from a group consisting of alkyls comprising one to six carbon atoms, aryls, alkoxys comprising one to six carbon atoms, trimethylsilyl and trifluoropropyl, m=1 to 4, n=0 to 2 and m+n=2 to 4; and (B) contacting said mixture with hydrogen chloride in the presence of a catalytic amount of a catalyst composition effective in promoting the formation of monosilanes from said high-boiling residue at a temperature of 150 to 500^{o}C. and a total reactor gauge pressure of 689.5 kPa to 34.5 MPa (100 to 5,000 psi).

The present process can further comprise: recovering monosilanes described by formula R_{y}H_{z}SiCl_{4-y-z} (2) where R is described above, y=0 to 4, z=0 to 3 and y+z=0 to 4.

The present process may be run in any standard pressurizable reactor suitable for contact with chlorosilanes. The process can be run as a batch process or as a continuous process, for example, in a stirred-bed reactor, a continuous stirred-tank reactor, a bubble-column reactor, a trickle-bed reactor or a plug-flow reactor. In a preferred embodiment, our process is run as a one-step process with no additional processing steps required to form monosilanes from the high-boiling residue.

Our claimed process is useful for converting a high-boiling residue resulting from the direct process to monosilane products. The direct process is usually conducted at a temperature of 300 to 350°C. in the presence of suitable catalysts and gaseous product. Feed materials and particulates are also continuously removed from said process. These removed materials are subsequently distilled to recover organochlorosilanes, leaving behind a "high-boiling residue."

A preferred high-boiling residue for use in the present process is one with a boiling point above 70°C. resulting from the distillation of organochlorosilanes from the reaction product of methyl chloride with silicon metalloid. A typical composition for such a high-boiling residue comprises: 50-60 wt% of disilanes of formula Si₂Q₆, where each Q is independently selected from methyl or chlorine and the disilane contains two to four methyl substituents per molecule; 15 to 25 wt% of silmethylenes described by formula Q₃SiCH₂SiQ₃, where Q is previously described and the silmethylene contains two to four methyl substituents per molecule; silalkylenes described by formula Q₃Si(SiQ₂)ₐ(CH₂)_{b}(SiQ₂)_{c}SiQ₃, where Q is previously described, a=0 to 4, b=1 to 3, c=0 to 4 and a+b+c≥2; 5 to 15 wt% of other high-boiling silicon-containing compounds; catalysts carried over from the direct process such as copper or compounds of copper; particulates containing silicon; and low levels of metals such as aluminum, calcium and iron or compounds thereof.

In our claimed process, a mixture of the high-boiling residue described above is contacted with an organosilane as described by formula (1). This mixture can be formed external to the reactor and afterward added to the reactor or it may be formed by adding the individual components to the reactor. The organosilane contains one to four substituents R, where each R is independently selected from a group consisting of alkyls comprising one to six carbon atoms, aryls, alkoxys comprising one to six carbon atoms, trimethylsilyl and trifluoropropyl. Substituent R is, for example, methyl, ethyl, propyl, isopropyl, tert-butyl, methoxy, ethoxy, phenyl, tolyl, naphthyl, trimethylsilyl and trifluoropropyl. Preferred is when R is methyl.

The organosilane is, for example, dimethyldichlorosilane, ethylmethyldichlorosilane, methylphenyldichlorosilane, 3,3,3-trifluoropropyl (methyl)dichlorosilane, methyldichlorosilane, ethyldichlorosilane, phenyldichlorosilane, trimethylchlorosilane, ethyldimethylchlorosilane, tetramethylsilane, trimethoxysilane and mixtures of such organosilanes. Preferred is where the organosilane is selected from a group consisting of dimethyldichlorosilane, methyldichlorosilane, trimethylchlorosilane and tetramethylsilane.

The weight percent of organosilane in the mixture with the high-boiling residue is not critical to the present process. Generally, a mixture where the organosilane is 0.1 to 95 wt% of the mixture is considered useful. Preferred is where the organosilane comprises 30 to 50 wt% of the mixture.

The mixture is contacted with hydrogen chloride, which may be fed to the reactor as a gas. The concentration of hydrogen chloride fed to the reactor is not critical and can be any amount sufficient to effect a desirable level of hydrochlorination. Preferred is when the amount of hydrogen chloride fed to the reactor is within a range of 1 to 70 wt%, based on the weight of the high-boiling residue fed to the reactor. Even more preferred is when the amount of hydrogen chloride fed to the reactor is 15 to 50 weight percent, on the same basis.

The reaction of the present process is effected in a reactor under a gauge pressure of 689.5 kPa to 34.5 MPa (100 to 5,000 psi) ensuring that at least a portion of the hydrogen chloride is in a liquid phase. More preferred is when said reaction is effected in a reactor under a gauge pressure of 2.07 to 10.3 MPa (300 to 1,500 psi). Most preferred is contact in a reactor at a gauge pressure of 4.14 to 7.58 MPa (600 to 1,100 psi).

The mixture comprising the high-boiling residue and the organosilane is contacted with hydrogen chloride in the presence of a catalytic amount of a catalyst composition effective in promoting formation of monosilanes from the high-boiling residue. The catalyst composition of the present process promotes the formation of monosilanes from the high-boiling residue. We believe that the process requires a catalytic composition which promotes redistribution of alkyl and chlorine groups between silicon atoms, hydrochlorination and scission of silicon-silicon bonds and optionally silicon-carbon bonds. Therefore, the catalyst composition comprises one or more chemical entities providing the described activities to our catalyst composition.

Typically, any Lewis Acid or its equivalent is used to provide redistribution activity to this catalyst composition. Examples of chemical entities useful to effect redistribution in the present process include those described in U.S. Patents 4,393,229 and 5,175,329. Examples of such useful chemical entities include aluminum trichloride, antimony pentachloride, zirconium tetrachloride, potassium aluminum tetrachloride, quaternary phosphonium halides, quaternary ammonium halides, ammonium halides, cuprous chloride, boric acid and boron halides.

Examples of chemical entities useful in the present catalyst composition to effect hydrochlorination include aluminum trichloride, antimony pentachloride, cuprous chloride, copper metal, copper salts, complexes of copper salts with organic ligands and those hydrogenation catalysts described by U.S. Patent 5,175,329.

Normally, those chemical entities which promote redistribution of alkyl and chlorine groups between silicon atoms and those chemical entities which promote hydrochlorination in the present process, will also promote scission of silicon-silicon bonds and optionally silicon-carbon bonds. Therefore, it is generally not necessary to add additional chemical entities to our catalyst composition to promote the scission of the silicon-silicon bonds and optionally silicon-carbon bonds. If such chemical entities are needed, a chemical entity such as aluminum trichloride or antimony pentachloride may be added to the composition.

In the present process, it is preferred that the catalyst composition comprise a single chemical entity which promotes redistribution, hydrochlorination and bond scission under process conditions. Such single chemical entities include aluminum trichloride and antimony pentachloride.

The present process requires the presence of a "catalytic amount" of a catalyst composition as described above. By "catalytic amount" it is meant an amount of the catalyst composition sufficient to facilitate the conversion of silicon containing compounds in the high-boiling residue to monosilanes. A preferred catalytic amount of catalyst composition is that sufficient to facilitate the conversion of polysilanes, such as methylchlorodisilanes, silmethylenes and silalkylenes in the high-boiling residue to monosilanes. The amount of catalyst composition required will depend upon the chemical entities comprising the catalyst composition and such amounts are easily determined by those skilled in the art.

When aluminum trichloride or antimony pentachloride comprise our catalyst composition, 0.01 to 20 wt% of catalyst composition, based on the combined weight of the catalyst composition and the high-boiling residue, is useful in the present process. Preferred is when the aluminum trichloride or antimony pentachloride concentration is within a range of 0.5 to 5 wt%, on the same basis.

A preferred catalyst composition for use in the present process is aluminum trichloride. The aluminum trichloride may be directly added to the process as the compound or it may be formed *in situ* by the addition of materials that will form aluminum trichloride. All or a portion of the catalytic amount of aluminum trichloride may be formed in situ during conduct of the direct process and isolation of the monosilane fraction to form the high-boiling residue. The source of the aluminum and chlorine necessary to form the aluminum trichloride can be the raw materials used in the direct process, particularly the silicon and organochloride feed. The catalytic amount of aluminum trichloride can be a combination of added aluminum trichloride and that *in situ* formed aluminum trichloride remaining in the high-boiling residue as isolated from the direct process.

The present process is conducted at a temperature of 150 to 500^{o}C. Preferred is a temperature of 275 to 425^{o}C. Most preferred is a temperature of 300 to 375°C.

Monosilanes of formula (2) are recovered from the present process. These monosilanes are separated by standard methods for separating liquid mixtures, for example, distillation. The monosilanes contain zero to four substituents R, where R is previously described. The monosilane can contain zero to three hydrogen atoms substituted on each silicon atom. The monosilanes can contain zero to four chlorine atoms substituted on each silicon atom.

The following example is provided to illustrate the present invention, wherein Me represents a methyl radical.

### Example

The ability of aluminum trichloride to catalyze the conversion of a mixture comprising a high-boiling residue and a mixture comprising methyldichlorosilane and trimethylchlorosilane in the presence of hydrogen chloride was evaluated in a stirred-batch reactor. The reactor was a 650 ml, pneumatically stirred, Parr Bomb reactor. A mixture comprising 28.7 wt% of a filtered high-boiling residue from a direct process for the preparation of methylchlorosilanes by the reaction of methyl chloride with silicon, 68.2 wt% of trimethylchlorosilane and 3.1 wt% of methyldichlorosilane was added to the reactor. The major components of the high-boiling residue are presented in Table 1 on a weight percent basis.

**TABLE 1**

| Major Components of High-Boiling Residue | |
|---|---|
| Component | Weight Percent |
| Cl₂MeSiSiMe₂Cl | 27.2 |
| Cl₂MeSiSiMeCl₂ | 52.9 |
| Cl₂MeSiCH₂SiMe₂Cl | 7.9 |
| Cl₂MeSiCH₂SiMeCl₂ | 12.0 |

3.5 wt% of aluminum trichloride was present in the reactor, based on the weight of the high-boiling residue. From 0.3 to 0.4 mole of hydrogen chloride gas was then fed to the reactor. The reactor was heated to 325^{o}C. and stirred for 3 hours, with an internal reactor gauge pressure of 4.8 to 6.9 MPa (700 to 1000 psi).

At the end of the run, a sample from the reactor was analyzed by gas chromatography using a thermal conductivity detector. The results of this analysis are reported in Table 2. The conversion of the high-boiling residue to monosilanes was 81.2 wt%. The product distribution is presented in Table 2 as a net value calculated as the weight percent species of monosilane represents of the total monosilane present in the product.

**TABLE 2**

| Monosilane Product Distribution | |
|---|---|
| Monosilane | Weight Percent |
| Me₂HSiCl | 0.8 |
| MeHSiCl₂ | 5.0 |
| MeSiCl₃ | 23.9 |
| Me₂SiCl₂ | 70.3 |

## Claims

1. A process for converting a high-boiling residue resulting from the reaction of an organochloride with silicon metalloid to monosilanes, the process comprising:
(A) forming a mixture comprising: (i) a high-boiling residue resulting from the reaction of an organochloride with silicon metalloid, and (ii) an organosilane described by formula RₘHₙSiCl₄₋ₘ₋ₙ where each R is independently selected from a group consisting of alkyls comprising one to six carbon atoms, aryls, alkoxys comprising one to six carbon atoms, trimethylsilyl and trifluoropropyl, m=1 to 4, n=0 to 2 and m+n=2 to 4; and then (B) contacting said mixture with hydrogen chloride in the presence of a catalytic amount of a catalyst composition effective in promoting the formation of monosilanes from the high-boiling residue at a temperature of 150 to 500°C. and a total reactor gauge pressure of 689.5 kPa to 34.5 MPa (100 to 5,000 psi).

2. A process according to claim 1 where the high-boiling residue has a boiling point above 70^{o}C. and results from the distillation of methylchlorosilanes from the reaction product of methyl chloride with silicon metalloid.

3. A process according to claim 1 where the organosilane is trimethylchlorosilane.

4. A process according to claim 1 where the organosilane comprises about 0.1 to 95 weight percent of the mixture.

5. A process according to claim 1 where the amount of hydrogen chloride contacted with the mixture is within a range of 1 to 70 weight percent, based on the weight of the high-boiling residue.

6. A process according to claim 1 where the catalyst composition is selected from aluminum trichloride or antimony pentachloride.

7. A process according to claim 6 where the catalyst composition comprises 0.01 to 20 weight percent, based on the combined weight of the catalyst composition and the high-boiling residue.

8. A process according to claim 6 where at least a portion of the aluminum trichloride is formed *in situ.*

9. A process according to claim 1 further comprising recovering monosilanes described by formula R_{y}H_{z}SiCl_{4-y-z} where R is as previously described, y=0 to 4, z=0 to 3 and y+z=0 to 4.

10. A process according to claim 1 where the forming and contacting of the mixture is conducted as a one-step process thereby forming monosilanes.

## Patentansprüche

1. Verfahren zur Umwandlung eines hochsiedenden Rückstands, resultierend aus der Umsetzung eines Organochlorids mit Siliciummetalloid zu Monosilanen, wobei das Verfahren umfasst:
(A) Ausbilden einer Mischung, enthaltend:
(i) einen hochsiedenden Rückstand, der aus der Reaktion eines Organochlorids mit Siliciummetalloid resultiert, und
(ii) ein Organosilan, das durch die Formel
RₘHₙSiCl₄₋ₘ₋ₙ
wiedergegeben ist, wobei jedes R unabhängig voneinander ausgewählt ist aus einer Gruppe bestehend aus Alkylgruppen, die 1 bis 6 Kohlenstoffatome enthalten, Arylgruppen, Alkoxygruppen, die 1 bis 6 Kohlenstoffatome enthalten, Trimethylsilyl und Trifluorpropyl, m = 1 bis 4 ist, n = 0 bis 2 ist und m+n =2 bis 4 ist, und dann
(B) Inkontaktbringen dieser Mischung mit Chlorwasserstoff in Gegenwart einer katalytischen Menge einer Katalysatorzusammensetzung, die wirksam ist, um die Bildung von Monosilanen aus dem hochsiedenden Rückstand zu unterstützen, bei einer Temperatur von 150 bis 500°C und einem Gesamtreaktorüberdruck von 689,5 kPa bis 34,5 MPa (100 bis 5.000 psi).

2. Verfahren nach Anspruch 1, wobei der hochsiedende Rückstand einen Siedepunkt oberhalb 70°C aufweist und aus der Destillation von Methylchlorsilanen aus dem Reaktionsprodukt von Methylchlorid mit Siliciummetalloid resultiert.

3. Verfahren nach Anspruch 1, wobei das Organosilan Trimethylchlorsilan ist.

4. Verfahren nach Anspruch 1, wobei das Organosilan ungefähr 0,1 bis 95 Gew.-% der Mischung ausmacht.

5. Verfahren nach Anspruch 1, wobei die Menge an Chlorwasserstoff, die mit der Mischung in Kontakt gebracht wird, innerhalb eines Bereichs von 1 bis 70 Gew.-%, bezogen auf das Gewicht des hochsiedenden Rückstands, liegt.

6. Verfahren nach Anspruch 1, wobei die Katalysatorzusammensetzung aus Aluminiumtrichlorid und Antimonpentachlorid ausgewählt ist.

7. Verfahren nach Anspruch 6, wobei die Katalysatorzusammensetzung 0,01 bis 20 Gew. -%. bezogen auf das Gesamtgewicht von Katalysatorzusammensetzung und hochsiedendem Rückstand, ausmacht.

8. Verfahren nach Anspruch 6, wobei wenigstens ein Teil des Aluminiumtrichlorids in situ gebildet wird.

9. Verfahren nach Anspruch 1, das zusätzlich das Gewinnen von Monosilanen, die durch die Formel R_{y}H_{z}SiCl_{4-y-z} wiedergegeben sind, umfasst, wobei R wie vorhergehend beschrieben ist, y = 0 bis 4 ist, z = 0 bis 3 ist und y+z = 0 bis 4 ist.

10. Verfahren nach Anspruch 1, wobei das Ausbilden und Inkontaktbringen der Mischung als ein einstufiger Prozess durchgeführt werden und dabei Monosilane gebildet werden.

## Revendications

1. Procédé pour convertir en monosilanes un résidu de point d'ébullition élevé en provenance de la réaction d'un organochlorure avec du silicium non-métal, le procédé comprenant les étapes consistant à :
(A) former un mélange comprenant : (i) un résidu de point d'ébullition élevé résultant de la réaction d'un organochlorure avec du silicium non-métal et (ii) un organosilane décrit par la fomlule RₘHₙSiCl₄₋ₘ₋ₙ dans laquelle chaque R est choisi de façon indépendante dans un groupe constitué des alkyles comprenant un à six atomes de carbone, des aryles, des alcoxys comprenant un à six atomes de carbone, du triméthylsilyle et du trifluoropropyle, m = 1 à 4, n = 0 à 2 et m + n = 2 à 4 ; et ensuite
(B) mettre en contact ledit mélange avec du chlorure d'hydrogène en présence d'une quantité catalytique d'une composition servant de catalyseur efficace pour favoriser la formation de monosilanes à partir du résidu de point d'ébullition élevé à une température de 150 à 500°C et à une pression totale relative du réacteur de 689,5 kPa à 34,5 MPa (de 100 à 5 000 psi).

2. Procédé selon la revendication 1 dans lequel le résidu de point d'ébullition élevé a un point d'ébullition situé au-dessus de 70°C et résulte de la distillation de méthylchlorosilanes provenant du produit de réaction du chlorure de méthyle avec du silicium non-métal.

3. Procédé selon la revendication 1 dans lequel l'organosilane est le triméthylchlorosilane.

4. Procédé selon la revendication 1 dans lequel l'organosilane constitue environ 0,1 à 95 pour cent en poids du mélange.

5. Procédé selon la revendication 1 dans lequel la quantité de chlorure d'hydrogène mise en contact avec le mélange est comprise dans un intervalle allant de 1 à 70 pour cent en poids, sur la base du poids du résidu de point d'ébullition élevé.

6. Procédé selon la revendication 1 dans lequel la composition servant de catalyseur est choisie entre le trichlorure d'aluminium ou le pentachlorure d'antimoine.

7. Procédé selon la revendication 6 dans lequel la composition servant de catalyseur constitue 0,01 à 20 pour cent en poids, sur la base du poids conjugué de la composition servant de catalyseur et du résidu de point d'ébullition élevé.

8. Procédé selon la revendication 6 dans lequel au moins une partie du trichlorure d'aluminium est formée *in situ.*

9. Procédé selon la revendication 1 comprenant en plus l'étape consistant à récupérer les monosilanes décrits par la formule R_{y}H_{z}SiCl_{4y-z} dans laquelle R est tel que décrit précédemment, y = 0 à 4, z = 0 à 3 et y + z = 0 à 4.

10. Procédé selon la revendication 1, dans lequel on réalise les phases consistant à former le mélange et à le mettre en contact comme un procédé à une seule étape formant de ce fait des monosilanes.
